# EUROPÄISCHE PATENTSCHRIFT

(11) **EP 1 756 547 B1**
(45) Veröffentlichungstag und Bekanntmachung des Hinweises auf die Patenterteilung: **14.05.2014**
(21) Anmeldenummer: 04715875.3
(22) Anmeldetag: 01.03.2004
(51) Int. Cl.: G01N 15/14, G01N 21/64

(54) **VORRICHTUNG ZUM MESSEN VON LICHT, WELCHES VON MIKROSKOPISCH KLEINEN PARTIKELN ODER BIOLOGISCHEN ZELLEN AUSGEHT**
DEVICE FOR MEASURING LIGHT EMITTED BY MICROSCOPICALLY SMALL PARTICLES OR BIOLOGICAL CELLS
DISPOSITIF PERMETTANT DE MESURER LA LUMIERE EMISE PAR DES CELLULES BIOLOGIQUES OU PARTICULES MICROSCOPIQUES

(43) Veröffentlichungstag der Anmeldung: 28.02.2007
(73) Patentinhaber: Partec GmbH, 02828 Görlitz (DE)
(72) Erfinder: GÖHDE, Wolfgang, 48301 Nottuln (DE)
(74) Vertreter: Habbel, Ludwig
(86) Internationale Anmeldenummer: PCT/DE2004/000394
(87) Internationale Veröffentlichungsnummer: WO 2005/085803

(56) Entgegenhaltungen:
- WO-A-85/05680
- DE-A1- 19 752 033
- GB-A- 1 335 466
- US-A- 3 248 551
- US-A- 4 660 971
- US-A- 5 475 487
- US-A- 5 822 062
- US-A- 6 154 276

## Beschreibung

Für die Charakterisierung mikroskopisch kleiner Partikel oder biologischer Zellen sind Verfahren bekannt, bei denen diese Partikel in Suspension durch einen intensiven Lichtstrahl, z.B. eines Lasers, hindurchgeführt werden. Das von den Partikeln gestreute Licht wird unter unterschiedlichen Winkeln aufgefangen und mit Hilfe von empfindlichen Photodetektoren erfasst und gemessen. Für die Differenzierung unterschiedlicher Zelltypen werden die Zellen mit Hilfe spezieller Fluoreszenzfarbstoffe markiert. Unterschiedliche Zellen lassen sich mit unterschiedlichen Markern anfärben. Passieren diese Zellen den Lichtstrahl zur Fluoreszenzanregurig, senden sie Fluoreszenzlicht aus, das ebenfalls mit Hilfe von Photodetektoren erfasst und quantifiziert wird. Auf diese Weise lassen sich z.B. in einem einzigen Messvorgang unterschiedliche Blutzellen oder weiße Blutkörperchen voneinander unterscheiden und zählen.

Dieses unter dem Begriff "Durchflusszytophotometrie" oder "Flow Cytometry" bekannte Verfahren hat große Verbreitung in der medizinischen Diagnostik gefunden. Es dient z.B. der automatisierten Krebszellenerkennung, der Quantifizierung von Leukozytensubpopulationen und zur Beurteilung des Immunstatus von HIV-AIDS-Patienten durch die Erfassung und Zählung der für die Immunabwehr verantwortlichen Leukozyten. Darüber hinaus dienen diese Verfahren als analytische Methoden unter Verwendung von mikroskopisch kleinen Kunststoffpartikeln, an welche die zu messenden biochemischen Substanzen wie Nukleinsäuren und Proteine zusammen mit Fluoreszenzfarbstoffen gebunden werden. Nachfolgend wird vereinfachend, und stellvertretend für andere Anwendungsmöglichkeiten, die Anwendung im Rahmen der Durchflusszytophotometrie erwähnt.

Die messtechnische Aufgabenstellung besteht darin, die sehr geringen Lichtmengen effektiv zu erfassen, die von derart kleinen Zellen oder Partikeln ausgehen. Um möglichst viele Zellen oder Partikel innerhalb kurzer Zeit vermessen zu können, bewegen sich diese sehr schnell durch den Lichtstrahl. Moderne Durchflusszytometer erfassen mehr als 10.000 einzelne Partikel pro Sekunde bei Verweildauern im Lichtstrahl von unter 10 µsec. Messtechnisch bedeutet das, dass die Integrationszeiten für die Lichtmessung sehr kurz sind.

Um dennoch eine hinreichende Messempfindlichkeit erreichen zu können, wird das von den Partikeln ausgesandte Licht von Mikroskopobjektiven erfasst, die eine hohe numerische Apertur haben, damit ein großer Anteil des Lichtes erfasst wird. Es werden also optische Elemente zwischen einer Durchflussküvette und einem Photodetektor verwendet, welche dem Photodetektor einen möglichst großen Anteil des von den Zellen ausgesendeten Lichtes zuführen sollen. Alle aus der Praxis bekannten Durchflusszytophotometer benutzen gleichartige Objektive mit hoher numerischer Apertur zur Erfassung eines möglichst großen Raumwinkels und damit eines möglichst großen Anteils des von den Zellen ausgesendeten Fluoreszenzlichtes, denn das Licht wird von den Partikeln nicht in einer bestimmten Richtung reflektiert, sondern sphärisch abgegeben. Über nachgeschaltete optische Elemente, Linsensysteme und Zwischenabbildungen gelangt das Fluoreszenzlicht auf den oder mehrere Photoempfänger.

Aus der US 5 822 062 ist eine derartige Vorrichtung bekannt, die mit optischen Linsen arbeitet.

Kennzeichnend für diese bekannten optischen Anordnungen ist, dass die verwendeten optischen Systeme, wegen der mit der hohen numerischen Apertur verbundenen geringen Tiefenschärfe, eine sehr präzise optische Abbildung der Messstelle bzw. der zu messenden Zelle erfordern. Dies führt zu hohen Anforderungen an die Präzision der Komponenten, an die mechanische Stabilität der gesamten Messanordnung und damit zu erheblichem Justieraufwand. Die dementsprechend große Sensibilität dieser Meßsysteme erlaubt beispielsweise nicht den mobilen Einsatz, z. B. in mobilen Labors zur mikrobiologischen Kontrolle von Gewässern oder zur therapiebegleitenden Bestimmung des Immunstatus von HIV-AIDS-Patienten in Regionen ohne jegliche medizinische Grundversorgung bzw. ohne Laborinfrastruktur.

Aus der DE 197 52 033 A1 ist eine Vorrichtung zur Detektion von Partikeln mit nicht abbildenden optischen Strukturen bekannt, bei welcher durch die Kontur bzw. den Querschnitt der lichtleitenden Struktur, die Möglichkeit besteht, das Licht zu konzentrieren und die Intensitätsverteilung über den Querschnitt zu ändern.

Der Erfindung liegt die Aufgabe zugrunde, eine gattungsgemäße Vorrichtung dahingehend zu verbessern, dass sie unter Beibehaltung der Messempfindlichkeit und Messgenauigkeit robust ausgestaltet und in mobilen Labors einsetzbar ist, und dass der Unterhaltungsaufwand, das Maß an Justierinterventionen und die Störanfälligkeit reduziert bzw. gänzlich eingespart werden können.

Diese Aufgabe wird durch eine Vorrichtung mit den Merkmalen des Anspruchs 1 gelöst.

Die Erfindung schlägt mit anderen Worten vor, das optische Element als Zylinder mit einer zylindrischen Reflexionsfläche auszugestalten. An Stelle eines komplizierten, mehrere optische Linsen umfassenden Aufbaus wird ein robustes, einteiliges optisches Element verwendet, welches keinerlei Justage oder Wartung bedarf. Als Zylinder im Sinne des vorliegenden Vorschlags sind dabei, wie nachstehend näher erläutert, sowohl massive als auch hohle Körper bezeichnet. Die Querschnittsform eines derartigen Zylinders ist vorzugsweise kreisrund, beispielsweise aufgrund von Fertigungsvorteilen; die vorschlagsgemäßen Vorteile ergeben sich jedoch auch bei abweichend von einem Kreis gestalteten, beispielsweise ovaloiden oder polygonen Querschnitten. Die zylindrischen Reflexionsflächen ergeben für das Licht einen Tunnel, durch welchen es praktisch verlustfrei von der Durchflussküvette zum Photodetektor gelangt.

Abgesehen von einer verbesserten Robustheit werden weitere Vorteile durch die vorgeschlagene Ausgestaltung der Vorrichtung ermöglicht:

### Verbesserte Sensitivität der Vorrichtung:

Die vorgeschlagene Anordnung erlaubt die Messung geringster Lichtmengen, die von mikroskopisch kleinen Partikeln oder Zellen ausgehen. Gegenüber dem Stand der Technik erfordert diese Anordnung keine Linsen oder komplizierte Linsensysteme. Die Nachteile der ansonsten benötigten Linsen mit hoher numerischer Apertur und des damit verbundenen hohen Justieraufwands entfallen somit. Die vorgeschlagene Anordnung kommt mit deutlich weniger optischen Grenzflächen aus. Das führt zu geringeren Lichtverlusten und damit zu größerer Messempfindlichkeit.

Bei entsprechend großem Durchmesser des lichtaufnehmenden Zylinders kann sichergestellt werden, dass der messtechnisch überhaupt erfassbare Licht-Anteil möglichst vollständig in den lichtaufnehmenden Zylinder gelangt, also in den von der zylindrischen Reflexionsfläche umschlossenen Raum. Das hängt damit zusammen, dass der Raumwinkel des zu erfassenden Fluoreszenzlichts im Wesentlichen durch den Totalreflexionswinkel an den Grenzflächen von Flüssigkeit und Glaswand im Küvettenkanal und Küvettenfenster bestimmt wird. Von dem sphärisch ausgesendeten Fluoreszenzlicht kann nur der innerhalb dieses Raumwinkels ausgesendete Anteil von der Durchflussküvette bis zum Photodetektor gelangen. Erfindungsgemäß ist der Durchmesser der zylindrischen Reflexionsfläche etwa 50fach oder noch größer sein als der minimale Abstand zwischen dem lichtaussendenden Partikel und der Lichteintrittsöffnung des Zylinders.

Ein weiterer Vorteil der vorgeschlagenen Anordnung im Vergleich zum Stand der Technik besteht darin, dass ein größerer Raumwinkel und damit ein größerer Anteil des ausgesandten Fluoreszenzlichtes erfasst wird, als es mit konventioneller Linsenoptik möglich ist. Ist der Zylinder beispielsweise nicht als Hohlzylinder, sondern massiv ausgestaltet und besteht er aus Glas, so wird er vorzugsweise mittels eines optischen Kitts mit der Durchflussküvette bzw. mit deren Fenster verbunden. Damit vergrößert sich der Raumwinkel des erfassten Lichtes noch einmal erheblich. Der Grund dafür sind geringere Verluste durch Reflexion an Grenzflächen, wie sie bei konventionellen Linsenoptionen unvermeidbar sind.

### Einfachere Montage und Inbetriebnahme der Vorrichtung:

Im Vergleich zu einem optischen Linsensystem wird erstens die Anzahl der benötigten Bauteile verringert, so dass erstens grundsätzlich die Herstellung der Vorrichtung vereinfacht wird.

Zweitens kann bei noch weiter vergrößertem Durchmesser der zylindrischen Reflexionsfläche als oben angegeben der dem maximal möglichen Raumwinkel entsprechende Licht-Anteil auch dann möglichst vollständig in den lichtaufnehmenden Zylinder gelangen, wenn sich der zu messende Partikel nicht optimal nah an der Licht-Eintrittsöffnung des Zylinders befindet, so dass der Abstand von dem lichtaufnehmenden Zylinder unkritisch ist, ähnlich wie bei einem vergrößerten Tiefenschärfebereich eines optischen Linsensystems. Die zylindrische Reflexionsfläche des Zylinders hat daher vorteilhaft einen vergleichsweise großen Durchmesser. Damit ist die Position des zu messenden Partikels rechtwinklig zur Beobachtungsrichtung ebenfalls unkritisch, und zwar vorteilhaft über die gesamte Breite des Küvettenkanals, so dass zuverlässig sämtliche lichtaussendenden Partikel bzw. Zellen mit maximaler Lichtausbeute messtechnisch erfasst werden können. Unabhängig von der Position des Partikels gelangt stets derselbe Raumwinkel des Fluoreszenzlichts, also derselbe Anteil des insgesamt sphärisch abgestrahlten Fluoreszenzlichts, in den lichtaufnehmenden Zylinder bzw. Tunnel. Die sensible Justierung der Messküvette gegenüber dem Photodetektor kann also entfallen

### Einfache Bedienbarkeit der Vorrichtung:

Die vorgeschlagene Vorrichtung zur Lichterfassung von mikroskopischen Partikeln erfordert keine Nachjustierung bzw. kein aufwendiges optisches Justieren, und zwar weder bei der Inbetriebnahme noch später während des Betriebs. Sämtliche Komponenten sind auf Dauer fest miteinander verbunden. Damit ist die Anordnung unempfindlich gegenüber Erschütterungen und ausreichend robust, um den Einsatz in mobilen Labors zu ermöglichen. Die vorgeschlagene Vorrichtung erschließt damit völlig neue Anwendungsfelder der Durchflusszytophotometrie, bei denen die bislang bekannten Anordnungen wegen ihrer Sensibilität nicht zum Einsatz kommen konnten. So wird z.B. eine therapiebegleitende Immundiagnostik für HIV-AIDS-Patienten in ländlichen Regionen der ärmsten Länder möglich.

Insbesondere wenn der Durchmesser des Zylinders wie vorerwähnt groß ist, ergeben sich die Vorteile einer sogenannten "großen numerischen Apertur", wie sie von optischen Linsensystemen grundsätzlich bekannt sind, aber bei gattungsgemäßen Vorrichtungen nicht verwirklicht sind und wie sie mit handelsüblichen, aus Glasfasern gebildeten sogenannten Lichtleitern nicht erzielbar sind, da diese eine erheblich geringere numerische Apertur aufweisen.

Ausführungsbeispiele der Erfindung werden nachfolgend anhand der rein schematischen Zeichnungen näher erläutert. Dabei zeigt
- Fig. 1: ein erstes Ausführungsbeispiel mit einer Messeinrichtung, welche einen Hohlzylinder aufweist,
- Fig. 2: ein zweites Ausführungsbeispiel, bei welchem zwei Messeinrichtungen ähnlich der von Fig. 1 vorgesehen sind, und
- Fig. 3: ein drittes Ausführungsbeispiel mit einer Messeinrichtung, welche einen massiven Zylinder aufweist.

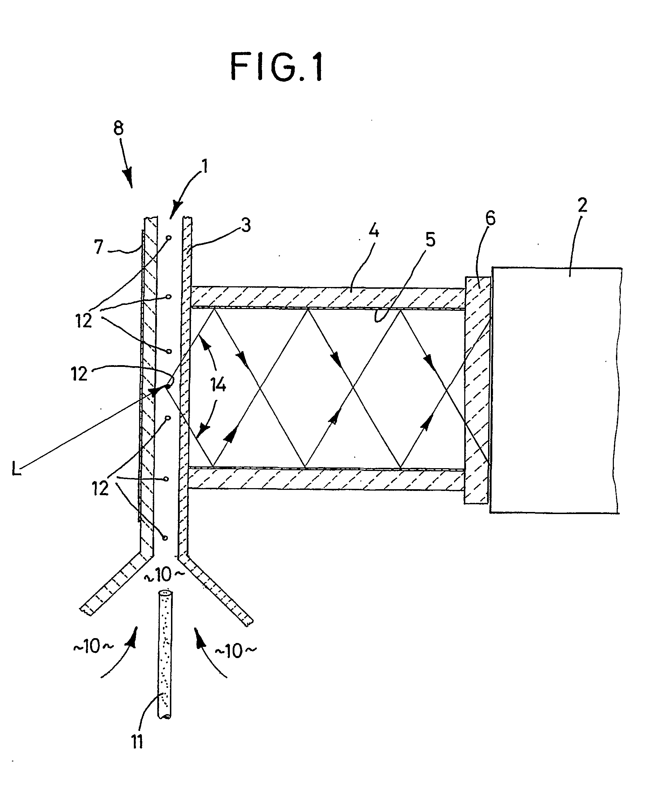

In den Zeichnungen ist stets ein stark schematisierter Ausschnitt eines Durchflusszytophotometers dargestellt. Aus Fig. 1 ist ersichtlich, dass sich in an sich bekannter Weise zwei jeweils durch Pfeile angedeutete Teilströme eines Transportfluids 10 oberhalb einer Kanüle 11 vereinigen. Zu zählende und fluoreszierend markierte Zellen 12 treten einzeln am oberen Ende der Kanüle 11 aus und werden mitsamt dem Transportfluid 10 durch einen Innenkanal 1 einer Durchflussküvette 8 der Vorrichtung transportiert. Dort werden sie von einem dünnen Laserstrahl angestrahlt und zur Aussendung von Fluoreszenzlicht angeregt. In der Zeichnung verläuft der Laserstrahl senkrecht zur Zeichenebene; er ist daher lediglich als ein auf eine Zelle 12 auftreffender Punkt erkennbar und durch einen mit L gekennzeichneten Pfeil markiert. Die aus Fig. 1 ersichtliche Breite des Innenkanals 1 ist so gering, dass die Zellen 12 einzeln in den Laserstrahl geraten und einzelne, unterscheidbare und daher zählbare Lichtimpulse erzeugen.

In Richtung eines Photonenempfängers bzw. Photodetektors 2 ist der Innenkanal 1 durch eine Glaswand in Form eines dünnwandigen Fensters 3 abgeschlossen. Die Wandstärke beträgt typischerweise 0,2 bis 1 mm. Auf diesem Fenster 3 liegt ein Hohlzylinder 4 mit einem im Verhältnis zu Breite des Innenkanals 1 großen Durchmesser von typischerweise 8 bis 10 mm Innendurchmesser auf. Die Innenwandfläche des Hohlzylinders 4 ist verspiegelt, so dass eine zylindrische Reflexionsfläche für das in den Hohlzylinder 4 gelangende Fluoreszenzlicht resultiert. Zugunsten der Robustheit der gesamten Vorrichtung kann der Hohlzylinder 4 aus Metall bestehen, andere Werkstoffe sind jedoch ebenfalls möglich, wobei vorzugsweise solche Werkstoffe verwendet werden, welche eine sehr glatte Oberfläche ermöglichen.

Erfindungsgemäß ist die Innenwandfläche mit einer zusätzlichen, optimale Reflexionseigenschaften aufweisenden Spiegelschicht 5 versehen, welche die zylindrische Reflexionsfläche schafft.

In Richtung des Photodetektors 2 schließt sich an den Hohlzylinder 4 ein Fluoreszenzlichtfilter 6 an, welches das Fluoreszenzlicht passieren lässt, das von den Zellen gemessen werden soll. Hinter dem Fluoreszenzlichtfilter 6 befindet sich der Photodetektor 2. Auf der dem Photodetektor 2 gegenüberliegenden Seite der Durchflussküvette 8 ist das Küvettenfenster mit einer Spiegelschicht 7 versehen. Damit erhöht sich die Ausbeute des gesammelten Lichts.

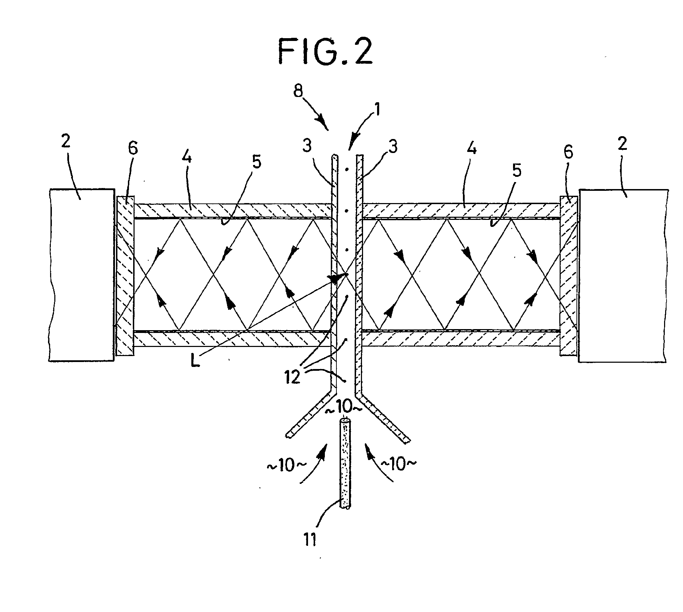

Gemäß Fig. 2 ist bei einem weiteren Ausführungsbeispiel auf beiden Seiten der Durchflussküvette 8 jeweils eine unabhängige Messeinrichtung angeordnet, die beide gemäß Fig. 1 ausgestaltet sind: Sie weisen dementsprechend zwei innenverspiegelte Hohlzylinder 4, Fluoreszenzlichtfilter 6 und Photodetektore 2 auf. Damit lassen sich durch Verwendung zweier unterschiedlicher Fluoreszenzlichtfilter 6 unterschiedliche Lichtwellenlängen in einem einzigen Messdurchgang erfassen.

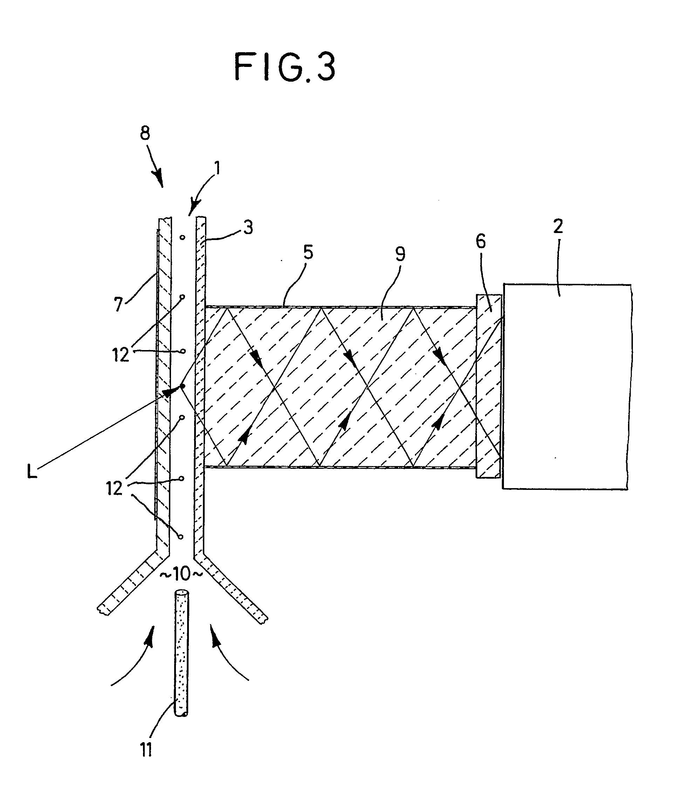

Gemäß Fig. 3 ist bei einem weiteren Ausführungsbeispiel vorgesehen, dass die zylindrischen Reflexionsfläche nicht durch einen innenverspiegelten Hohlzylinder gebildet ist, sondern durch einen massiven Zylinder 9 in Form eines Glasstabes, der außen verspiegelt ist und dessen Außendurchmesser dem Innendurchmesser des Hohlzylinders 4 von Fig. 1 entspricht. Die in diesem Fall außen angebrachte Spiegelschicht 5 bildet die zylindrische Reflexionsfläche und kann mit einer aus Übersichtlichkeitsgründen nicht dargestellten Schutzschicht versehen sein, beispielsweise einem Schutzlack, welcher die Spiegelschicht vor Witterungseinflüssen schützt. Ähnlich dem Ausführungsbeispiel von Fig. 2 kann auch bei einer Vorrichtung nach Fig. 3 die Anordnung zweier Messeinrichtungen vorgesehen sein, die in diesem Fall jeweils massive Zylinder 9 enthalten.

Bei sämtlichen Vorrichtung ist jeweils vorgesehen, die Messeinrichtungen und insbesondere die Zylinder 4 und 9 durch ein aus den Zeichnungen nicht ersichtliches Gehäuse vor mechanischen Einflüssen zu schützen.

In Fig. 1 ist ein Raumwinkel 14 des zu erfassenden Fluoreszenzlichtes angedeutet. Im Wesentlichen wird dieser Raumwinkel 14 durch den Totalreflexionswinkel an den Grenzflächen von Flüssigkeit und Glaswand im Innenkanal 1 und Fenster 3 bestimmt. Damit ist der Abstand des zu messenden Partikels von dem lichtaufnehmenden Hohlzylinder 4 unkritisch. Der verspiegelte lichtaufnehmende Hohlzylinder 4 hat einen vergleichsweise großen Durchmesser. Damit ist die Position des zu messenden Partikels rechtwinklig zur Beobachtungsrichtung ebenfalls unkritisch. Unabhängig von der Position des Partikels gelangt stets das Licht aus demselben Raumwinkel 14 des Fluoreszenzlichtes in den Hohlzylinder 4.

## Patentansprüche

1. Vorrichtung zur Messung des von mikroskopisch kleinen Partikeln oder Zellen (12) ausgehenden Lichts,
mit einer Durchflussküvette (8), durch welche die leuchtenden Partikel oder Zellen (12) geführt werden,
wobei die Durchflussküvette (8) ein lichtdurchlässiges Fenster (3) aufweist,
und mit einem Photodetektor (2) welcher das von den leuchtenden Partikeln oder Zellen (12) ausgesendete Licht erfasst,
und mit einem optischen Element, welches das aus dem Fenster (3) austretende Licht zu dem Photodetektor (2) führt,
wobei das optische Element als Zylinder (4, 9) mit einer zylindrischen Reflexionsfläche ausgestaltet ist,
wobei
die Durchflussküvette (8) außerhalb des Zylinders (4, 9) angeordnet ist,
derart, dass der Zylinder (4, 9) zwischen der Durchflussküvette (8) und dem Photodetektor (2) angeordnet ist,
wobei die Durchflussküvette (8) mit ihrer Längsachse senkrecht zur Längsachse des Zylinders (4, 9) angeordnet ist,
und wobei die Vorrichtung zur Messung des von mikroskopisch kleinen Partikeln oder Zellen (12) ausgehenden Fluoreszenzlichts ausgestaltet ist,
wobei sich zwischen der Durchflussküvette (8) und dem Photodetektor (2) ein Fluoreszenzlicht durchlassendes Fluoreszenzlichtfilter (6) befindet,
die Vorrichtung frei von Linsen ist, und [ - ](A.7), indem der Durchmesser der zylindrischen Reflexionsfläche 50fach oder noch größer ist als der minimale Abstand zwischen dem lichtaussendenden Partikel und der Lichteintrittsöffnung des Zylinders (4,9), wobei [ - ](A.9).

2. Vorrichtung nach Anspruch 1,
**dadurch gekennzeichnet,**
**dass** der Zylinder als Hohlzylinder (4) ausgestaltet ist, dessen innere Oberfläche die zylindrische Reflexionsfläche bildet.

3. Vorrichtung nach Anspruch 1,
**dadurch gekennzeichnet,**
**dass** der Zylinder als massiver, lichtdurchlässiger Zylinder (9) ausgestaltet ist, dessen äußere Oberfläche die zylindrische Reflexionsfläche bildet.

4. Vorrichtung nach einem der vorhergehenden Ansprüche,
**dadurch gekennzeichnet,**
**dass** sich auf zwei Seiten der Durchflussküvette (8) je eine unabhängige Lichtmessanordnung befindet, die mit unterschiedlichen nur das Fluoreszenzlicht durchlassenden Filtern ausgestattet sind.

5. Vorrichtung nach den Ansprüchen 3 und 4,
**dadurch gekennzeichnet,**
**dass** auf beiden Seiten der Durchflussküvette (8) Fluoreszenzlichtfilter (6) angeordnet sind,
wobei die beiden Fluoreszenzlichtfilter (6) für unterschiedliche Lichtwellenlängen durchlässig sind.

6. Vorrichtung nach einem der vorhergehenden Ansprüche,
**dadurch gekennzeichnet,**
**dass** die zylindrische Reflexionsfläche des Zylinders (4, 9) einen kreisrunden Querschnitt aufweist.
der Zylinder (4, 9) eine große numerische Apertur aufweist
die zylindrische Reflexionsfläche durch eine Beschichtung des Zylinders (4, 9) gebildet ist.

7. Vorrichtung nach einem der vorhergehenden Ansprüche,
**dadurch gekennzeichnet,**
**dass** der auf die Partikel oder Zellen (12) gerichtete Lichtstrahl (L), senkrecht zur Längsachse des Zylinders (4, 9) und senkrecht zur Längsachse der Durchflussküvette (8) verläuft.

## Claims

1. Device for measuring light emitted by microscopically small particles or cells (12), having a flow-through cell (8) through which the luminous particles or cells (12) are guided, where the flow-through cell (8) has a translucent window (3), and having a photodetector (2) which detects the light emitted by the luminous particles or cells (12), and having an optical element which directs the light emitted from the window (3) at the photodetector (2), where the optical element is formed as a cylinder (4, 9) with a cylindrical reflection surface, and where the flow-through cell (8) is arranged outside the cylinder (4, 9),
in such a way that the cylinder (4, 9) is arranged between the flow-through cell (8) and the photodetector (2), where the lengthwise axis of the flow-through cell (8) is arranged vertically to the lengthwise axis of the cylinder (4, 9) and where the device for measuring the fluorescent light emitted by microscopically small particles or cells (12) is formed, where a fluorescent-light filter (6) allowing the fluorescent light to pass through is arranged between the flow-through cell (8) and the photodetector (2), the device is free of lenses, and the cylinder (4, 9) has a large numerical aperture, where the diameter of the cylindrical reflection surface is at least 50 times greater than the minimum distance between the light-emitting particle and the light-inlet opening of the cylinder (4, 9), where the cylindrical reflection surface is formed by coating the cylinder (4, 9).

2. Device in accordance with claim 1, **characterised in that** the cylinder is formed as a hollow cylinder (4) whose inner surface forms the cylindrical reflection surface.

3. Device in accordance with claim 1, **characterised in that** the cylinder is formed as a solid translucent cylinder (9) whose outer surface forms the cylindrical reflection surface.

4. Device in accordance with any of the above claims, **characterised in that** an independent light-measuring arrangement is located on each of two sides of the flow-through cell (8), which are fitted with different filters which allow only the fluorescent light to pass through.

5. Device in accordance with claims 3 and 4, **characterised in that** fluorescent-light filters (6) are arranged on both sides of the flow-through cell (8), where each of the fluorescent-light filters (6) allows light of different wavelengths to pass through.

6. Device in accordance with any of the above claims, **characterised in that** the cylindrical reflection surface of the cylinder (4, 9) has a circular cross section.

7. Device in accordance with any of the above claims, **characterised in that** the beam of light (L) directed at the particles or cells (12) is perpendicular to the lengthwise axis of the cylinder (4, 9) and perpendicular to the lengthwise axis of the flow-through cell (8).

## Revendications

1. Dispositif pour mesurer la lumière partant de particules ou cellules (12) de taille microscopique, comprenant une cuvette de passage (8) à travers laquelle les particules ou cellules lumineuses (12) sont guidées, sachant que la cuvette de passage (8) présente une fenêtre (3) perméable à la lumière, et comprenant un photodécteur (2) qui capte la lumière partant des particules ou cellules (12) lumineuses, et comprenant un élément optique qui conduit vers le photodétecteur (2) la lumière sortant par la fenêtre (3), sachant que l'élément optique est configuré comme un cylindre (4, 9) doté d'une surface de réflexion cylindrique, sachant que la cuvette de passage (8) est agencée en dehors du cylindre (4, 9),
de sorte que le cylindre (4, 9) soit agencé entre la cuvette de passage (8) et le photodétecteur (2), sachant que l'axe longitudinal de la cuvette de passage (8) est agencé perpendiculaire à l'axe longitudinal du cylindre (4, 9), et sachant que le dispositif est configuré pour mesurer la lumière fluorescente partant des particules ou cellules (12) de taille microscopique, sachant qu'entre la cuvette de passage (8) et le photodétecteur (2) se trouve un filtre à lumière fluorescente (6) laissant passer cette lumière, que le dispositif est exempt de lentilles et que le cylindre (4, 9) présente une grande ouverture numérique puisque le diamètre de la surface de réflexion cylindrique est 50 fois supérieur ou plus à l'écart minimum entre la particule émettant la lumière et l'orifice de pénétration de cette dernière dans le cylindre (4, 9), sachant que la surface de réflexion est formée par un revêtement sur le cylindre (4, 9).

2. Dispositif selon la revendication 1, **caractérisé en ce que** le cylindre est configuré en cylindre creux (4) dont la surface intérieure forme la surface de réflexion cylindrique.

3. Dispositif selon la revendication 1, **caractérisé en ce que** le cylindre est configuré comme un cylindre (9) massif perméable à la lumière dont la surface extérieure forme la surface de réflexion cylindrique.

4. Dispositif selon l'une des revendications précédentes, **caractérisé en ce qu'**un montage de photométrie indépendant se trouve respectivement sur deux côtés de la cuvette de passage (8), montage qui est doté de filtres différents ne laissant passer que la lumière fluorescente.

5. Dispositif selon les revendications 3 et 4, **caractérisé en ce que** sur les deux côtés de la cuvette de passage (8) sont montés des filtres (6) à lumière fluorescente, sachant que les deux filtres (6) sont perméables à de la lumière fluorescente présentant des longueurs d'onde différentes.

6. Dispositif selon l'une des revendications précédentes, **caractérisé en ce que** la surface réfléchissante du cylindre (4, 9) présente une section circulaire.

7. Dispositif selon l'une des revendications précédentes, **caractérisé en ce que** le rayon de lumière (L) braqué sur les particules ou cellules (12) a un tracé perpendiculaire à l'axe longitudinal du cylindre (4, 9) et perpendiculaire à l'axe longitudinal de la cuvette de passage (8).
